# EUROPEAN PATENT SPECIFICATION

(11) **EP 2 250 135 B1**
(45) Date of publication and mention of the grant of the patent: **21.04.2021**
(21) Application number: 09715920.6
(22) Date of filing: 03.02.2009
(51) Int. Cl.: C03C 17/34, C03C 17/36

(54) **COATED GLAZING**
Beschichtete Verglasung
VITRAGE REVÊTU

(30) Priority: 27.02.2008 GB 0803574
(43) Date of publication of application: 17.11.2010
(73) Proprietor: Pilkington Group Limited, St. Helens Merseyside WA10 3TT (GB)
(72) Inventor: SANDERSON, Kevin David, Skelmersdale Lancashire WN8 0BQ (GB); MANNING, Troy Darrell, Ormskirk Lancashire L40 7RQ (GB); BENITO GUTIERREZ, Guillermo, E-28022 Madrid (ES); FITZGERALD, Darren Paul, St Helens Merseyside WA9 4XH (GB); PALMER, Liam, Ormskirk Lancashire L40 5UF (GB)
(74) Representative: Hazzard, Alan David
(86) International application number: PCT/GB2009/050099
(87) International publication number: WO 2009/106864

(56) References cited:
- EP-A- 1 291 331
- WO-A-2007/093823
- WO-A2-2007/115796
- JP-A- 2003 267 756
- US-A- 6 103 363
- US-A1- 2002 114 945
- US-A1- 2003 215 648
- US-A1- 2007 190 339
- WERNER ET AL: "Simulations of coatings to avoid external condensation on low U-value windows", OPTICAL MATERIALS, ELSEVIER SCIENCE PUBLISHERS B.V. AMSTERDAM, NL, vol. 30, no. 6, 1 February 2008 (2008-02-01), pages 968-978, XP022472882, ISSN: 0925-3467, DOI: 10.1016/J.OPTMAT.2007.05.030
- Anna Werner: "External Water Condensation and Angular Solar Absorptance : Theoretical Analysis and Practical Experience of Modern Windows", Digital Comprehensive Summaries of Uppsala Dissertations from the Faculty of Science and Technology 283, 1 January 2007 (2007-01-01), XP55646238, ISBN: 978-91-5-546830-9 Retrieved from the Internet: URL:http://www.diva-portal.org/smash/get/d iva2:169880/FULLTEXT01.pdf

## Description

The present invention relates to a method for reducing or preventing the formation of condensation which may otherwise occur on the outermost surface of a glazing.

With increasing emphasis on environmental awareness and responsibility, glass manufacturers, especially glazing manufacturers, are being asked to provide increasingly efficient glazings for installation in buildings, vehicles and for use in other applications, e.g. photovoltaic (solar) cells. As a result there now exist different energy efficient glasses to perform different functions depending on the environment in which they are installed.

In a warm/hot climate a solar control glass (e.g. a body-tinted glass) may be used to reduce the amount of solar heat that is transmitted through the glass from the outside to the inside of a structure (e.g. building, vehicle, etc.), thereby reducing the heat gain (temperature increase) within the structure. This may furthermore reduce the load on any air-conditioning system that may be in operation, and thus the energy consumed. Similarly in a cool/cold climate a low emissivity glazing (having a low emissivity coating (to be described in more detail below) on one of its inner surfaces) may be used to reduce the amount of heat that is transmitted through the glazing from the inside to the outside of a structure (e.g. building, vehicle, etc.), thereby reducing the heat loss (temperature decrease) from within the structure. Furthermore this may reduce the load on any heating system that may be in operation, and thus the energy consumed.

A particular problem has been observed with highly insulating glazing containing low emissivity coatings when installed in structures in cold climates - namely the formation of condensation (dew) on their outermost surface, which is typically un-coated. The outermost surface (the external surface) is that which is in contact with the environment on the exterior of the structure and is usually referred to as surface one.

Condensation is a problem because visibility through the glazing is reduced, often to the extent that nothing can be seen through the glazing when a person tries to look into or out from the structure in which it is installed. The view through such a glazing may effectively become undesirably obstructed. This observation holds for all kinds of glazings including monolithic (i.e. single panes of glass), laminated glazings (i.e. having two or more panes of glass joined together by a ply of interlayer material extending between them) and multiple pane glazing units (i.e. having two or more panes of glass separated by a gaseous layer in a sealed space between each).

In addition, the more energy efficient (i.e. the more highly insulating) a low emissivity glass / glazing is made to be, the more quickly and more frequently condensation has been observed to form. The emissivity, ε, of a particular coating refers to the tendency of that coating to absorb and radiate energy, as compared to a blackbody which is a perfect radiator and is defined as having an emissivity of unity (ε = 1). A low emissivity coating, as referred to throughout this specification, is a poor absorber and radiator of longer wavelength thermal energy and has ε < 1 and thus it acts as an imperfect barrier (of approximately 70 % efficiency) to transmission of heat. Condensation forms on a surface (including the outermost surface of glass) when the temperature of that surface drops to a temperature below the dew point, which is the humidity-dependent temperature at which water vapour in air condenses to form water droplets.

The fact that condensation forms on the outermost surface of an insulating glazing unit (IGU), a type of multiple pane glazing unit, containing one or more low emissivity coatings is surprising because according to known literature, including e.g. WO 02/46490 A2, a solution to the problem of condensation forming on a glazing is to provide a low emissivity coating on one or more surfaces of that glazing. Unfortunately, this solution has proved to be less than satisfactory and the problem of formation of external condensation on the outermost surface of glazings in cool/cold climates remains.

Indeed in her PhD thesis entitled "External Water Condensation and Angular Solar Absorptance - Theoretical Analysis and Practical Experience of Modern Windows" [ISBN 978-91-554-6830-9] published in April 2007, Anna Werner discusses the problem of external condensation on windows in buildings in Scandinavian countries, e.g. Sweden, especially those windows which are made from highly insulating, low emissivity glazing. For such windows external condensation may form for up to a total of 700 hours per calendar year (i.e. 1 January to 31 December), which is an unacceptably high number.

In this thesis it is proposed in principle that provision of a hydrophilic titania coating on the surface of a low emissivity coating, itself on the external surface of a glazing, may reduce the formation of external condensation. However, the use of a coating layer having hydrophilic properties only on the external surface is not sufficient to solve the problem of external condensation. WO 2007/115796 or US 6,103,363 describe further anti-condensation coatings for glazings.

It is thus an object of the present invention to expand upon this outline principle and to provide a method of reducing or preventing the tendency for condensation to form on the outermost surface of a glazing according to claim 1.

The water droplet angle may be attributed to the photoactivity of the coated surface, which is capable of destroying organic dirt on the surface which would otherwise increase the contact angle of the surface above 30° and act as a potential nucleation area for external condensation. Furthermore reduction in visibility for a person looking through the glazing due to condensation is minimised or eliminated.

Surprisingly the benefit conferred by the combination of a low emissivity coating (having an emissivity of 0.7 or less) along with hydrophilic and photoactive properties (to be described in more detail below) leads to a marked decrease in the level of condensation formed, the frequency with which it forms and the time it takes to dissipate. The unexpected synergy achieved by the combination of these three properties has resulted in a glazing which is suitable for installation in a structure (e.g. building, vehicle, etc.) in a location where the detrimental effect on visibility through the glazing of external condensation would otherwise have been a problem.

A further surprising benefit of such a combination occurs when the temperature of the environment in which the glazing is installed is below freezing (i.e. below 0 °C). The coating may reduce the occurrence and visual impact of external frost caused by the freezing of external condensation. This is particularly advantageous in cold climates.

Thus a glazing is installed in structures in cool/cold climates, especially including those which are frequently subjected to the effects of cold, clear night skies (providing otherwise ideal conditions for external condensation to form). The effect on the formation of external condensation is not limited to cold climates, however. Indeed in may be beneficial in any area where the external surface of a glazing is at or below the dew point. Surprisingly this includes glazings in a hot climate where air conditioning inside the structure in which the glazings are installed often results in a reduction in the temperature of surface one to the dew point at which external condensation may occur. Provision of a glazing according to the invention in such a location would solve the problem by preventing or reducing the onset of and/or aiding the dissipation of external condensation.

By defining that the coating layer extends over the outermost surface of the glazing, it is meant that the coating is on surface one of the glazing. In conventional glazing surface numbering terminology, the surfaces of each of the panes of a glazing are consecutively numbered inwardly from the surface that contacts the environment on the exterior of a structure to the surface that contacts the environment inside the structure.

Preferably the coating layer is a transparent composite layer comprising two or more different coating layers. Further preferably the composite layer comprises a low emissivity layer and an outermost hydrophilic, photoactive layer.

The emissivity of a glazing, otherwise known as the "corrected" or "hemispherical" emissivity, is a surface-effect which is measured and quoted according to BS EN 12898:2001. Preferably a coated glazing according to the invention has an emissivity of 0.6 or less, further preferably less than 0.3 and possibly even less than 0.1. Such values may be compared with the emissivity of a pane of clear, un-coated flat glass of 0.84.

A number of low emissivity coatings are known in the art, any of which may be used in accordance with the present invention. However, the low emissivity layer may especially be a metallic layer of thickness less than 150 Å. More specifically the metallic layer may be a layer of silver of approximately 100 Å thickness.

Alternatively the low emissivity layer may be a metal oxide layer, especially a transparent conductive oxide, of thickness less than 1 µm. Oxides of metals such as tin, zinc, indium, tungsten and molybdenum may be comprised in a single layer of metal oxide. Such a coating may further comprise a dopant, for example fluorine, chlorine, antimony, tin, aluminium, tantalum, niobium, indium or gallium, so that coatings such as fluorine-doped tin oxide and tin-doped indium oxide may result. Preferably the metal oxide layer is a layer of fluorine-doped tin oxide of approximately 100 - 4000 Å thickness, more preferably greater than 500 and most preferably greater than 1000 Å, typically in the region of 1500 - 2500 Å to achieve the desired low emissivity.

Further alternatively the low emissivity layer may comprise a multilayer coating stack including a metal layer (or a conductive metal compound) and at least one dielectric layer. The multilayer stack structure may be repeated to further enhance the emissivity of the coating. Amongst other similar metals, silver, gold, copper, nickel and chromium may be used as the metal layer in a multilayer stack; indium oxide, antimony oxide or the like may be used as the conductive metal compound. Coatings comprising one or two layers of silver interleaved between layers of a dielectric such as an oxide of silicon, aluminium, titanium, vanadium, tin or zinc are typical multilayer stacks.

The hydrophilic, photoactive coating on the outermost surface of the glazing is advantageously a coating having a contact angle less than around 30°, preferably less than 25°, most preferably less than 15°. Indeed the contact angle is as low as 10° for optimum performance of the hydrophilic and photoactive properties. One result of this property is that when water contacts the exposed surface of a hydrophilic coating, it has a tendency to spread over the coating, effectively forming a sheet. When encouraged to run off the coating (for example under the influence of gravity), the water remains sheet-like and has a minimal effect on visibility through the glazing.

The hydrophilic coating is photoactive meaning any dirt or other organic contaminants present on the coating may be structurally degraded when the coating is exposed to ultraviolet radiation, and subsequently washed away by water. This is an especially important consideration for a coating layer designed such that the formation of condensation on it is reduced or eliminated, because the presence of dirt or other organic contaminants typically leads to nucleation of water droplets (because of the change in contact angle on the surface that the water contacts), thus encouraging formation of condensation. The cleaner the exposed surface of the coating, the less likely it is that condensation will form, and the better the synergy with the low emissivity and hydrophilic properties of the glazing.

The photoactivity of a coating surface may be measured using known methods such as the decomposition of a model pollutant, e.g. stearic acid, applied to the surface by spin casting. When exposed to ultraviolet (UV) radiation, the photoactive coating photo-decomposes the stearic acid to a greater or lesser extent resulting in the formation of gaseous water vapour and carbon dioxide, thus leaving the surface with a reduced amount of contamination and preferably free of contamination. From infrared (IR) transmission spectra, the rate of decrease of the area of the IR peaks corresponding to the C-H stretches of the stearic acid film is measured and expressed in units of cm⁻¹ min⁻¹. Alternatively photoactivity may be measured using a method such as the decomposition of the chemical methylene blue.

The outermost coating layer exhibits photoactivity of at least 1 x 10⁻³ cm⁻¹ min⁻¹, further preferably of at least 2.5 x 10⁻³ cm⁻¹ min⁻¹ to ensure that the surface is sufficiently clean to contribute to the reduction or elimination of the formation of condensation. Indeed the photoactivity may be as high as 5 x 10⁻³ cm⁻¹ min⁻¹.

The hydrophilic, photoactive coated surface may require an initial period of activation in order to achieve the contact angle of 30° or less and the photoactivity of at least 1 x 10⁻³ cm⁻¹ min⁻¹. Activation may be achieved by exposure of the coated surface to UV radiation from natural daylight for at least 8 hours a day for 5 days in the UK. Thereafter, the contact angle and photoactivity may continue at the desired level provided the glazing is exposed to natural daylight on a daily basis and not taken indoors for any prolonged period.

Any known hydrophilic, photoactive coating deposited by any suitable known technique (including sol-gel, spray pyrolysis, magnetron sputtered vacuum deposition and chemical vapour deposition processes) may be used in the present invention, provided a contact angle of 30° or less is achieved. However, preferably the hydrophilic, photoactive layer is a layer of crystalline (anatase) titania of between 100 Å and 2500 Å thickness, and further preferably the hydrophilic, photoactive layer is the outermost layer of the coating layer. Advantageously the titania layer may be between 200 Å and 1800 Å in thickness, further advantageously between 250 Å and 1000 Å, for it to perform its hydrophilic and photoactive functions most efficiently.

Furthermore the hydrophilic, photoactive layer may be a modified layer, e.g. a doped metal oxide layer, so that the photoabsorption band responsible for the photoactivity is activated in the visible region of the electromagnetic spectrum, in addition to or instead of activation in the UV region. Such a modified layer may exhibit a higher degree of photoactivity than an unmodified layer.

Low emissivity and hydrophilic coatings may additionally be provided with an underlayer e.g. comprising silicon oxide, silicon oxynitride and/or aluminium oxide. Such a layer may serve as a barrier to control migration of alkali metal ions from the glass and/or as a colour-suppressing layer to suppress iridescent reflection colours resulting from variations in thickness of the low emissivity and hydrophilic, photoactive layers.

Whichever coating layer option is chosen, the (outermost) coating layer preferably has an average surface roughness, Ra, of 20 nm or less, further preferably 15 nm or less and possibly as low as 5 nm or less. The lower the roughness value, the more durable the coating is likely to be and the less likely it is that external condensation will form. The smoother the (outermost) coating layer is, the more easily any condensation formed upon it will disperse and become sheet-like, rather than droplet-like, thus aiding visibility through the glazing. In combination with the low emissivity property of the coating layer, which appears to significantly delay the onset of formation of condensation on its surface, the relatively smooth hydrophilic and photoactive nature of the coating layer means that, advantageously, any condensation formed is invisible, or hardly visible, to an observer looking through the glazing.

Furthermore the (outermost) coating layer preferably exhibits between 5 and 20 % reflection (when measured normal to the coating), further preferably between 8 and 18 % and most preferably less than 15 %. For glazings which may be installed in commercial and residential dwellings, such reflection values are especially advantageous because the risk of adverse light reflection effects, which in certain cities around the world are banned due to the potential impact on pilots, is minimised. Furthermore for residential dwellings, if the reflection is too high this often results in a lower visible transmission through the glazing, allowing insufficient light into the structure, which may be detrimental to the view of the exterior environment for an observer inside the dwelling.

The pane of glass comprised in the glazing may be a pane of body-tinted float glass. A body-tint may further delay the appearance of any external condensation because such a glass typically absorbs incident infrared radiation, thus the surface temperature of the glass increases. The pane of tinted glass may have a clear base glass composition in the range (by weight):

| | |
|---|---|
| SiO₂ | 68 - 75 % |
| Al₂O₃ | 0 - 5 % |
| Na₂O | 10 - 18 % |
| K₂O | 0 - 5 % |
| MgO | 0 - 10 % |
| CaO | 5- 15 % |
| SO₃ | 0 - 2 % |

The glass may also contain other additives, for example, refining aids, which would normally be present in an amount of up to 2 %. This base glass composition may comprise one or more of the following tinting agents: an oxide of cobalt, nickel, chromium, vanadium, manganese, titanium, copper, cerium, neodymium and erbium, and/or selenium (this being a non-exhaustive list).

In addition the glass may be flat or it may be curved, and it may be toughened, for example by thermal or chemical tempering. When the glass is subjected to a heat treatment process, for example tempering or bending, this may be done before or after deposition of the coating layer. However this depends on the ability of the particular coating layer(s) to withstand such heat treatments.

Usually the glass will be provided in a thickness of between 1 and 10 mm, further preferably less than 8 mm and most preferably between 2 and 5 mm.

Although thus far a glazing according to the invention has been described as being a monolith, it could also be provided as a multiple pane glazing comprising at least two panes of glass spaced apart from one another, wherein one or more of the panes of glass is a monolithic glazing as described above and the coating layer is positioned on the outermost surface (surface one) of the multiple pane glazing. Following the surface description terminology introduced earlier, for two panes of glass, the surfaces are numbered one to four from the outermost to the innermost.

A multiple pane glazing may be optimally provided in a total thickness of 30 mm or less, however a thickness in the range from 4 mm to 25 mm is preferred. The thinner the individual panes of glass, the lighter in weight the glazing as a whole will be.

The multiple pane glazing may be in the form of a laminated glazing wherein two panes of glass are mutually separated by at least one ply of interlayer material, which joins the panes together. Further panes of glass or other material may be joined to the laminate, and other functional coatings (e.g. further low emissivity coatings) may be present on one or more of the other surfaces of the laminate (including the surfaces of the interlayer ply/plies). Any known interlayer material such as polyvinyl butyral (PVB), polyvinyl chloride (PVC), polyurethane (PU), ethylvinyl acetate (EVA), etc. may be used (which may be clear or body-tinted) and it may be provided in a thickness of between 0.38 mm and 1.1 mm, typically 0.76 mm.

Alternatively the multiple pane glazing may be in the form of a sealed unit wherein at least two panes of glass are mutually separated by a gaseous layer. The simplest form of such a unit is a double glazing unit, in which two panes of glass are separated using spacers and the sealed space between them filled with an inert gas. Again other functional coatings may be present on one or more of the other surfaces of the unit.

A monolithic glazing and a multiple pane glazing (especially in the form of a sealed unit) may be used as an architectural window, for use both externally and internally of a building, e.g. window glass, door glass, roof-window glass, etc., especially in locations where external condensation would otherwise be a problem. A monolithic glazing and a multiple pane glazing (especially in the form of a laminate) may be used as an automotive window, e.g. windscreen, rear window, side window, roof window, etc., again especially in locations where external condensation would otherwise be a problem. Indeed any of the glazings described throughout this specification may be used in any circumstance and location where the detrimental effect of external condensation would otherwise be a problem in terms of transmittance of radiation through the glass, e.g. with glass covers for photovoltaic (solar) cells.

In addition to a glazing itself, the present invention further provides a method of reducing or preventing the tendency for condensation to form on the outermost surface of a glazing comprising:
providing the outermost surface of a pane of glass comprised in the glazing with a photoactive (after any necessary initial activation period), hydrophilic, low emissivity coating layer, having a water droplet contact angle of 30° or less and an emissivity of 0.7 or less (measured relative to its outermost surface),
wherein reduction in visibility through the glazing due to condensation is minimised or eliminated.

Surprisingly the benefit conferred by the combination of a low emissivity coating (having an emissivity of 0.7 or less) along with hydrophilic and photoactive properties leads to a synergistic and marked decrease in the level of condensation formed, the frequency with which it forms and the time it takes to form.

The photoactivity of the coating ensures that organic dirt which naturally forms on the surface of glass is decomposed, preferably completely decomposed. This maintains the contact angle of the outermost surface at or below 30°. Thus when the external face of the glazing reaches the dew point any water condensing on the surface condenses and may immediately spread out to form a sheet. If the surface were hydrophilic only, organic dirt on the surface would, over time, result in a variable contact angle meaning that condensation would not readily sheet due to the water forming droplets in areas of organic contamination. As such it is essential that the outermost surface not only has a low contact angle, but also has a mechanism whereby natural soiling from hydrophobic agents such as organic dirt/oils, which would increase the likelihood of surface droplet formation, is destroyed to maintain a surface with a contact angle of 30° or less.

If formed at all, condensation may form on the outermost surface of the glazing for 50 % fewer hours per calendar year, preferably 75 % fewer hours, compared to the number of hours condensation that would typically form on a corresponding prior art glazing in the same location having an uncoated outermost surface. Referring to the "up to 700 hours per calendar year" formation of external condensation observed in Scandinavia, a 50 % decrease corresponds to formation of condensation on the outermost surface of a glazing according to the invention installed in substantially the same location as such a prior art glazing for no more than 350 hours per calendar year.

Depending on the location (and climate) in which a glazing is installed, the emissivity of the coating layer may be appropriately tuned by altering its thickness to help achieve this at least 50 % reduction. The more likely it is that condensation may form, the thicker the coating that may be required.

Preferably the view through a glazing according to the invention will not be obscured by the formation of external condensation on the window. Obscuration may be assessed in a two-stage test, which will be described in more detail later, in which a score of between 1 and 5 is given to a glazing: 1 being a poor score (heavy condensation) and 5 being an excellent score (no condensation). A glazing accordingly to the invention preferably scores at least 4.5, and more preferably 5, in such test.

Preferably the coating layer is a transparent composite layer comprising two or more different coating layers. Further preferably the composite layer comprises a low emissivity layer and a hydrophilic, photoactive layer, each as described earlier.

The low emissivity layer is preferably a layer of fluorine-doped tin oxide of greater than 500 Å, most preferably greater than 1000 Å thickness and more preferably in the region of 1500 - 2500 Å. Typically such a low emissivity layer may be deposited from one or more of the following tin-containing precursor materials, oxygen-containing precursor materials and fluorine-containing precursor materials. Tin precursor materials include vaporised dimethyl tin (di)chloride, vaporised tin tetrachloride, vaporised tetrabutyltin, vaporised tetramethyltin and vaporised monobutyl tin trichloride. Each is typically provided in a carrier gas, e.g. helium and/or nitrogen. Oxygen precursors include vaporised water, oxygen itself and vaporised oxygen-containing organic solvents such as alcohols, esters, ethers and organic acids, all in a carrier gas, e.g. helium and/or nitrogen. Fluorine-containing precursor materials include hydrogen fluoride (in anhydrous form or as a vaporised solution), trifluoroethanoic acid and hexafluoropropylene oxide.

The hydrophilic, photoactive layer is preferably a layer of crystalline (anatase) titania of between 100 Å and 2500 Å thickness, preferably between 200 Å and 1800 Å, further preferably between 250 Å and 1000 Å. Typically such a layer of titania may be deposited from one or more of the following titanium precursor materials and oxygen-containing materials. Titanium precursor materials include vaporised titanium tetraisopropoxide, vaporised titanium tetrachloride and vaporised titanium tetraethoxide. Each is typically provided in a carrier gas, e.g. helium and/or nitrogen. The oxygen precursor materials may be the same as listed in the previous paragraph; it/they may be added to the vaporised titanium-containing precursor(s).

Preferably the percentage of tin-containing precursor material in the gas phase is 0.1 - 10 %, more preferably 0.5 - 2 %. Preferably the percentage of oxygen-containing species in the gas phase is 30 - 80 %, more preferably 40 - 60 %. Preferably the percentage of fluorine-containing species in the gas phase is 0.05 - 10 %, more preferably 0.1 - 2 %. The ratio of tin-containing species to oxygen-containing species to fluorine-containing species may beneficially be around 3.6 : 61.3 : 1.

Preferably the percentage of titanium-containing precursor material in the gas phase is 0.1 - 10 %. More preferably the percentage of titanium-containing precursor material in the gas phase is 0.5 - 2 %. Preferably the percentage of oxygen-containing species in the gas phase is 0.1 - 10 %. More preferably the percentage of oxygen-containing species in the gas phase is 0.5 - 2 %. The ratio of titanium-containing species to oxygen-containing species may typically be in the range from 1 : 0.5 to 1 : 5. However, beneficially, the ratio of titanium-containing species to oxygen-containing species may be 1 : 1 to 1 : 2.5.

Low emissivity and hydrophilic coatings may additionally be provided with an underlayer e.g. comprising silicon oxide, silicon oxynitride and/or aluminium oxide. This may serve as a barrier to control migration of alkali metal ions from the glass and/or as a colour suppressing layer to suppress iridescent reflection colours resulting from variations in thickness of the low emissivity layer.

Whichever coating option is chosen, it may be provided as one of two principal types: a "hard" or "pyrolytic" on-line coating or a "softer" off-line coating. A hard coating may be deposited in an "on-line" process, in which the coating is pyrolytically deposited onto the surface of flat glass during its formation, in known manner, for example by use of a chemical vapour deposition (CVD) process. An "off-line" coating is one that is deposited onto the surface of a piece of glass subsequent to complete manufacture of the glass. Off-line coatings include sputtered coatings which are deposited, for example by use of a magnetic sputtering technique under vacuum conditions.

Preferably the coating layer is deposited onto the outermost surface of the pane of glass using an on-line CVD coating technique. There are many variations of CVD techniques that may be used to perform the method of the present invention, however the following specific examples of known coating deposition processes are especially useful:
- international patent publication WO 2004/085701 A1 describes the deposition of a titania coating;
- international patent publication WO 98/06675 A1 describes the deposition of a doped tin oxide coating;
- US patent 5,798,142 describes the deposition of a silica coating (an underlayer as described above).

For a better understanding, reference is made to a monolithic glazing which is formed in the manner as generally described in either of the following two examples, with appropriate modification to the gas streams.

### Example 1:

A fluorine-doped tin dioxide layer is deposited using an on-line CVD coater. To do this the temperature of a glass substrate is set to 600-650 °C. A tin-containing precursor, in the form of dimethyltin dichloride (DMT), is heated to 177 °C and a stream of carrier gas, in the form of helium, is passed through the DMT. Gaseous oxygen is subsequently added to the DMT/helium gas stream. At the same time, a fluorine-containing precursor, in the form of an aqueous solution of hydrogen fluoride (HF), is heated to 204 °C. Additional water is added to create a mixture of gaseous HF and water. The two gas streams are mixed and delivered to the hot glass surface at a rate of 395 litres/minute. The ratio of DMT to oxygen to HF is 3.6 : 61.3 : 1. The thickness of the resulting fluorine-doped tin oxide layer is approximately 3200 Å and it has a nominal sheet resistance of 14 ohms/square.

Titania is deposited onto the fluorine-doped tin dioxide layer again using an on-line CVD coater. To do this the temperature of the glass is set to 600 °C. A titanium-containing precursor, in the form of titanium tetraisopropoxide (TTIP), is heated to 173 °C and a stream of carrier gas, in the form of dry nitrogen, is passed through the TTIP at a rate of 0.4 litres/minute to give a gas phase concentration of 0.7 %. An oxygen-containing precursor, in the form of ethylethanoate, is heated to 50 °C and a stream of carrier gas, in the form of dry nitrogen, is passed through the ethylethanoate at a rate of 0.25 litres/minute to give a gas phase concentration of 1.3 %. The ratio of TTIP to ethylethanoate is 1:1.9. The thickness of the resulting titania layer is approximately 80 Å. The entire coating stack has a sheet resistance of 830 ohms/square. The contact angle of a 1 microlitre (µL) drop of water in the surface of the coating after 30 minutes UV exposure (measured using a UV lamp providing 0.76 W m⁻² nm⁻¹ at a calibrated wavelength of 340 nm) is 6°. The photoactivity of the coated surface is approximately 3 x 10⁻³ cm⁻¹ min⁻¹, measured using the stearic acid test described earlier.

### Example 2:

A fluorine-doped tin oxide layer is deposited in the same manner as described in Example 1. Titania is deposited onto this layer again using an on-line CVD coater. The temperature of the glass is set to 600 °C. A titanium-containing precursor, in the form of TTIP, is heated to 160 °C and a stream of carrier gas, in the form of dry nitrogen, is passed through the TTIP at a rate of 0.95 litres/minute to give a gas phase concentration of 0.9 %. An oxygen-containing precursor, in the form of ethylethanoate, is heated to 42 °C and a stream of carrier gas, in the form of dry nitrogen, is passed through the ethylethanoate at a rate of 0.55 litres/minute to give a gas phase concentration of 1.7 %. The ratio of TTIP to ethylethanoate is 1:1.85. The thickness of the resulting titania layer is approximately 470 Å. The entire coating stack has a sheet resistance of 250 ohms/square. The contact angle of a 1 µL drop of water in the surface of the coating after 30 minutes UV exposure (measured as per Example 1) is 28°. The photoactivity of the coated surface is approximately 1 x 10⁻³ cm⁻¹ min⁻¹ again measured using the stearic acid test described earlier.

Fifteen glazing samples, having a sheet resistance of 7, 15, 70, 250 or 1000 ohms/square, were prepared in a manner similar to that described above. Each comprised a titania layer as the outermost coating layer deposited onto the surface of a fluorine-doped tin oxide layer. The ratio of the thickness of fluorine-doped tin oxide (SnO₂:F) layer to the thickness of titania (TiO₂) layer decreased as the sheet resistance increased from 7 to 1000 ohms/square.

Each glazing was subsequently assessed in the two-stage test briefly described earlier. In this test, a glazing is installed vertically in a test frame, having opposing faces A and B. The outermost coating layer of the glazing corresponds to face A of the frame. An object is placed normal to, and one metre away from, face A of the glazing. A person stands normal to, and three metres away from, face B of the glazing, as though looking from the inside of a structure through to the outside.

Step One of the test requires the person to determine whether the object is distorted when viewed through the glazing. Step Two requires the person to determine whether any droplets of condensation are observable on the surface of the outermost coating layer. For each step, a score of from 1 to 5 is given, with 1 being a poor score (heavy condensation) and 5 being an excellent score (no condensation). The average of these scores is given as the overall score for a glazing.

For each of the fifteen samples, the two-stage test was performed by the same person over an initial nine day period - the results are recorded in Table I below. Weather conditions, including ambient temperature, dew point temperature and relative humidity, for those nine days are recorded in Table III below, along with the time of their recording.

All of the fifteen samples score at least an average of four in this test, with ten of them (Examples 1-7, 10, 13 and 15) scoring greater than 4.5. Indeed many score 5 in a number of individual day's measurements. This means that all of the fifteen glazings, especially those scoring greater than an average of 4.5, exhibit very little external condensation (the result being very good to excellent).

For comparison, glazings having only an outermost low emissivity coating or a hydrophilic coating (not both), or no outermost coating at all, were also assessed using the two-stage test at the same time at the fifteen samples according to the invention. These results are recorded in Table II below. Apart from Comparative Example 21 (having a hydrophilic layer only), all of the Comparative Examples scored on average less than 4. Indeed many scored only 1 or 2 (poor or not so good) in a number of individual day's measurements. Comparative Example 22 is a pane of clear, uncoated float glass.

The two-stage test was subsequently repeated with the same fifteen samples over a longer time period: 17 days in month #1, 13 days in month #2 and 18 days in month #3 (48 days in total). The results are recorded in Table V below. The thickness and roughness of the outermost titania layer of each sample, and the measured contact angle with a 1 µL droplet of water after 30 minutes of UV irradiation, are recorded in Table IV below.

All of the samples having a sheet resistance of either 7 or 15 consistently score a monthly average of at least 4.5 (a "percentage effectiveness" score of at least 90 %) in this test. Of the remaining samples, Examples 10, 13 and 15 score greater than 4.5 (greater than 90 % effectiveness) however Examples 8, 9, 11, 12 and 14 score less than 4.5 (less than 90 % effectiveness).

For comparison, glazings having only an outermost low emissivity coating or a hydrophilic coating (not both), or no outermost coating at all, were also assessed a second time using the longer two-stage test. These results are recorded in Tables VI and VII below. All of these comparative examples have an average monthly score of less than 4.5 (less than 90 % effectiveness), and so are outside the scope of the invention. Accordingly, Examples 8, 9, 11, 12 and 14 are also to be considered as comparative examples, outside the scope of the invention.

From analysis of all of the results obtained, it has been possible to assign an optimum titania thickness to glazings having a particular sheet resistance, such that the resultant glazings are greater than 90 % effective in reducing condensation:

| **Sheet Resistance (Ω/square)** | **TiO₂ Thickness (Å)** |
|---|---|
| 7 | > 500 |
| 15 | > 500 |
| 70 | < 300 |
| 250 | < 400 |
| 1000 | > 400 |

**Table I**

| **Ex.** | **Glass Thickness (mm)** | **Sheet Resistance (Ω/square)** | **Score (Out of 5)** | | | | | | | | | |
|---|---|---|---|---|---|---|---|---|---|---|---|---|
| | | | **Day 1** | **Day 2** | **Day 3** | **Day 4** | **Day 5** | **Day 6** | **Day 7** | **Day 8** | **Day 9** | **Average over 9 Days** |
| 1 | 3 | 7 | 5 | 5 | 5 | 5 | 5 | 5 | 5 | 4 | 5 | 4.89 |
| 2 | 3 | 7 | 4 | 5 | 5 | 5 | 5 | 5 | 5 | 4 | 5 | 4.78 |
| 3 | 4 | 15 | 5 | 5 | 5 | 5 | 5 | 5 | 5 | 4 | 5 | 4.89 |
| 4 | 4 | 15 | 5 | 5 | 5 | 5 | 5 | 5 | 5 | 4 | 5 | 4.89 |
| 5 | 4 | 15 | 5 | 5 | 5 | 5 | 5 | 5 | 5 | 4 | 5 | 4.89 |
| 6 | 4 | 15 | 5 | 5 | 5 | 5 | 5 | 5 | 5 | 4 | 5 | 4.89 |
| 7 | 4 | 15 | 3 | 5 | 5 | 5 | 5 | 5 | 5 | 4 | 5 | 4.67 |
| 8 | 4 | 70 | 4 | 5 | 5 | 5 | 5 | 1 | 5 | 3 | 4 | 4.11 |
| 9 | 4 | 70 | 5 | 5 | 5 | 5 | 5 | 1 | 5 | 3 | 5 | 4.33 |
| 10 | 4 | 70 | 3 | 5 | 5 | 5 | 5 | 5 | 5 | 4 | 5 | 4.67 |
| 11 | 4 | 250 | 3 | 5 | 5 | 5 | 5 | 1 | 5 | 4 | 5 | 4.22 |
| 12 | 5 | 1000 | 5 | 5 | 5 | 5 | 5 | 1 | 5 | 3 | 5 | 4.33 |
| 13 | 5 | 1000 | 5 | 5 | 5 | 5 | 5 | 5 | 5 | 4 | 5 | 4.89 |
| 14 | 5 | 1000 | 5 | 5 | 5 | 5 | 5 | 2 | 5 | 3 | 5 | 4.44 |
| 15 | 5 | 1000 | 5 | 5 | 5 | 5 | 5 | 5 | 5 | 4 | 5 | 4.89 |

**Table II**

| **Comp. Ex.** | **Glass Thickness (mm)** | **Sheet Resistance (Ω/square)** | **Score (Out of 5)** | | | | | | | | | |
|---|---|---|---|---|---|---|---|---|---|---|---|---|
| | | | **Day 1** | **Day 2** | **Day 3** | **Day 4** | **Day 5** | **Day 6** | **Day 7** | **Day 8** | **Day 9** | **Average over 9 Days** |
| 16 | 3 | 7 | 3 | 5 | 5 | 5 | 5 | 2 | 5 | 1 | 4 | 3.89 |
| 17 | 4 | 15 | 3 | 5 | 5 | 5 | 5 | 2 | 5 | 1 | 4 | 3.89 |
| 18 | 4 | 70 | 3 | 5 | 5 | 5 | 5 | 2 | 5 | 1 | 4 | 3.89 |
| 19 | 4 | 250 | 2 | 5 | 5 | 5 | 5 | 1 | 5 | 1 | 4 | 3.67 |
| 20 | 5 | 1000 | 2 | 5 | 5 | 5 | 5 | 1 | 3 | 1 | 4 | 3.44 |
| 21 | 4 | > 1 x 10⁶ | 3 | 5 | 5 | 5 | 5 | 3 | 5 | 3 | 4 | 4.22 |
| 22 | 4 | >> 1 x 10⁶ | 1 | 5 | 5 | 5 | 5 | 1 | 3 | 4 | 3 | 3.56 |

**Table III**

| | **Day 1** | **Day 2** | **Day 3** | **Day 4** | **Day 5** | **Day 6** | **Day 7** | **Day 8** | **Day 9** |
|---|---|---|---|---|---|---|---|---|---|
| **Time** | 08:00 | 08:00 | 08:00 | 08:00 | 08:00 | 09:00 | 08:00 | 08:00 | 09:00 |
| **Ambient Temperature (°C)** | - | - | 8.2 | 4.2 | 5.2 | 4.6 | 3.1 | 2.5 | 2.0 |
| **Dew Point Temperature (°C)** | - | - | 5.7 | -1.0 | 1.3 | 1.1 | 1.2 | 0.6 | -4.3 |
| **Relative Humidity (%)** | - | - | 84 | 69 | 76 | 78 | 87 | 87 | 63 |

**Table IV**

| **Ex.** | **Glass Thickness (mm)** | **Sheet Resistance (Ω/square)** | **TiO₂ Thickness (nm)** | **TiO₂ Roughness Ra (nm)** | **Contact Angle (°)** |
|---|---|---|---|---|---|
| 1 | 3 | 7 | 67.2 | 16.66 | 19.22 |
| 2 | 3 | 7 | 59.7 | 24.40 | 16.03 |
| 3 | 4 | 15 | 65 | 9.44 | 9.79 |
| 4 | 4 | 15 | 69 | 7.96 | 17.53 |
| 5 | 4 | 15 | 61 | 8.91 | 21.12 |
| 6 | 4 | 15 | 154 | 13.56 | 7.07 |
| 7 | 4 | 15 | 204 | 12.61 | 21.12 |
| 8 | 4 | 70 | 65 | 6.92 | 11.00 |
| 9 | 4 | 70 | 35 | 7.26 | 23.27 |
| 10 | 4 | 70 | 27 | 10.60 | 43.37 |
| 11 | 4 | 250 | 47 | 9.23 | 10.58 |
| 12 | 5 | 1000 | 12 | 5.21 | 13.49 |
| 13 | 5 | 1000 | 43 | 8.22 | 9.79 |
| 14 | 5 | 1000 | 23.5 | 10.98 | 10.17 |
| 15 | 5 | 1000 | 103 | 5.96 | 13.49 |

**Table V**

| **Ex.** | **Month #1** | | **Month #2** | | **Month #3** | | **Total** | | |
|---|---|---|---|---|---|---|---|---|---|
| | **Cumulative Score** | **% Score** | **Cumulative Score** | **% Score** | **Cumulative Score** | **% Score** | **Cumulative Score** | **% Score** | **Average Monthly Score** |
| 1 | 71/85 | 83.53 | 63/65 | 96.92 | 87/90 | 96.67 | 221/240 | 92.08 | 4.60 |
| 2 | 69/85 | 81.18 | 62/65 | 95.38 | 87/90 | 96.67 | 218/240 | 90.83 | 4.54 |
| 3 | 70/85 | 82.35 | 61/65 | 93.85 | 87/90 | 96.67 | 218/240 | 90.83 | 4.54 |
| 4 | 71/85 | 83.53 | 63/65 | 96.92 | 87/90 | 96.67 | 221/240 | 92.08 | 4.60 |
| 5 | 70/85 | 82.53 | 62/65 | 95.38 | 86/90 | 95.56 | 218/240 | 90.83 | 4.54 |
| 6 | 70/85 | 82.35 | 63/65 | 96.92 | 87/90 | 96.67 | 220/240 | 91.67 | 4.58 |
| 7 | 69/85 | 81.18 | 63/65 | 96.92 | 87/90 | 96.67 | 219/240 | 91.25 | 4.56 |
| 8 | 60/85 | 70.59 | 57/65 | 87.69 | 84/90 | 93.33 | 201/240 | 83.75 | 4.19 |
| 9 | 63/85 | 74.12 | 62/65 | 95.38 | 84/90 | 93.33 | 209/240 | 87.08 | 4.35 |
| 10 | 67/85 | 78.82 | 63/65 | 96.92 | 87/90 | 96.67 | 217/240 | 90.42 | 4.52 |
| 11 | 64/85 | 75.29 | 62/65 | 95.38 | 87/90 | 96.67 | 213/240 | 88.75 | 4.44 |
| 12 | 64/85 | 75.29 | 59/65 | 90.77 | 85/90 | 94.44 | 208/240 | 86.67 | 4.33 |
| 13 | 70/85 | 82.35 | 62/65 | 95.38 | 87/90 | 96.67 | 219/240 | 91.25 | 4.56 |
| 14 | 65/85 | 76.47 | 61/65 | 93.85 | 84/90 | 93.33 | 210/240 | 87.50 | 4.38 |
| 15 | 70/85 | 82.35 | 62/65 | 95.38 | 87/90 | 96.67 | 219/240 | 91.25 | 4.56 |

**Table VI**

| **Comp. Ex.** | **Glass Thickness (mm)** | **Sheet Resistance (Ω/square)** | **Coating Thickness (nm)** | **Coating Roughness, Ra (nm)** | **Contact Angle (°)** |
|---|---|---|---|---|---|
| 16 | 3 | 7 | 621.3 | 23.43 | - |
| 17 | 4 | 15 | 363.3 | 13.03 | - |
| 18 | 4 | 70 | 179 | 8.93 | - |
| 19 | 4 | 250 | 140 | 7.50 | - |
| 20 | 5 | 1000 | 109 | 10.27 | - |
| 21 | 4 | > 1 x 10⁶ | - | - | - |
| 22 | 4 | >> 1 x 10⁶ | - | - | - |

**Table VII**

| **Comp. Ex.** | **Month #1** | | **Month #2** | | **Month #3** | | **Total** | | |
|---|---|---|---|---|---|---|---|---|---|
| | **Cumulative Score** | **% Score** | **Cumulative Score** | **% Score** | **Cumulative Score** | **% Score** | **Cumulative Score** | **% Score** | **Average Monthly Score** |
| 16 | 56/85 | 65.88 | 59/65 | 90.77 | 83/90 | 92.22 | 198/240 | 82.5 | 4.13 |
| 17 | 58/85 | 68.24 | 59/65 | 90.77 | 84/90 | 93.33 | 201/240 | 83.75 | 4.19 |
| 18 | 56/85 | 65.88 | 59/65 | 90.77 | 83/90 | 92.22 | 198/240 | 82.5 | 4.13 |
| 19 | 56/85 | 65.88 | 55/65 | 84.62 | 81/90 | 90.00 | 192/240 | 80 | 4 |
| 20 | 53/85 | 62.35 | 56/65 | 86.15 | 83/90 | 92.22 | 192/240 | 80 | 4 |
| 21 | 62/85 | 72.94 | 59/65 | 90.77 | 84/90 | 93.33 | 205/240 | 85.42 | 4.27 |
| 22 | 50/85 | 58.82 | 52/65 | 80 | 77/90 | 85.56 | 179/240 | 74.58 | 3.73 |

## Claims

1. A method of reducing or preventing the tendency for condensation to form on the outermost surface of a glazing comprising:
providing the outermost surface of a pane of glass comprised in the glazing with a photoactive, hydrophilic, low emissivity coating layer, having a water droplet contact angle of 10° to 30° and an emissivity of 0.7 or less,
wherein reduction in visibility through the glazing due to condensation is minimised or eliminated,
wherein the coating layer is a composite layer comprising two or more different coating layers,
wherein the composite layer comprises a low emissivity layer and an outermost hydrophilic, photoactive layer, and
wherein the outermost hydrophilic, photoactive layer exhibits photoactivity of at least 1 x 10⁻³ cm⁻¹ min⁻¹.

2. A method according to any preceding claim wherein the low emissivity layer is a layer of fluorine-doped tin oxide of thickness greater than 500 Å.

3. A method according to any preceding claim wherein the layer of fluorine-doped tin oxide is deposited from precursor materials comprising:
(a) tin precursor materials including one or more of vaporised dimethyl tin chloride, vaporised tin tetrachloride, vaporised tetrabutyltin, vaporised tetramethyltin and vaporised monobutyl tin trichloride;
(b) oxygen-containing materials including one or more of vaporised water, oxygen itself and vaporised oxygen-containing organic solvents such as alcohols, esters, ethers and organic acids;
(c) fluorine-containing materials including one or more of hydrogen fluoride (in anhydrous form or as a vaporised solution), trifluoroethanoic acid and hexafluoropropylene oxide.

4. A method according to any preceding claim wherein the hydrophilic, photoactive layer is a layer of crystalline (anatase) titania of between 100 Å and 2500 Å thickness.

5. A method according to claim 4 wherein the layer of titania is deposited from precursor materials comprising:
(a) titanium precursor materials including one or more of vaporised titanium tetraisopropoxide, vaporised titanium tetrachloride and vaporised titanium tetraethoxide;
(b) oxygen-containing materials including one or more of vaporised water, oxygen itself and vaporised oxygen-containing organic solvents such as alcohols, esters, ethers and organic acids.

6. A method according to any preceding claim wherein the coating layer is deposited onto the outermost surface of the pane of glass using an on-line chemical vapour deposition coatig technique.

## Patentansprüche

1. Verfahren zur Verringerung oder Verhinderung der Neigung zur Kondensationsbildung an der äußersten Oberfläche einer Verglasung, umfassend:
Versehen der äußersten Oberfläche einer in der Verglasung enthaltenen Glasscheibe mit einer photoaktiven, hydrophilen Beschichtungsschicht mit niedrigem Emissionsvermögen, die einen Wassertropfen-Kontaktwinkel von 10° bis 30° und ein Emissionsvermögen von 0,7 oder weniger aufweist,
wobei die Verringerung der Sicht durch die Verglasung aufgrund von Kondensation minimiert oder beseitigt wird,
wobei die Beschichtungsschicht eine Verbundschicht ist, die zwei oder mehr verschiedene Beschichtungsschichten umfasst,
wobei die Verbundschicht eine Schicht mit niedrigem Emissionsvermögen und eine hydrophile, photoaktive äußerste Schicht umfasst, und
wobei die hydrophile, photoaktive äußerste Schicht eine Photoaktivität von mindestens 1 x 10⁻³ cm⁻¹ min⁻¹ aufweist.

2. Verfahren nach einem der vorhergehenden Ansprüche, bei dem die Schicht mit niedrigem Emissionsvermögen eine Schicht aus fluordotiertem Zinnoxid mit einer Dicke von mehr als 500 A ist.

3. Verfahren nach einem der vorhergehenden Ansprüche, wobei die Schicht aus fluordotiertem Zinnoxid aus Vorläufermaterialien abgeschieden wird, die umfassen:
(a) Zinnvorläufermaterialien, umfassend eines oder mehrere von verdampftem Dimethylzinnchlorid, verdampftem Zinntetrachlorid, verdampftem Tetrabutylzinn, verdampftem Tetramethylzinn und verdampftem Monobutylzinntrichlorid;
(b) sauerstoffhaltige Materialien, umfassend eines oder mehrere von verdampftem Wasser, Sauerstoff selbst und verdampften sauerstoffhaltigen organischen Lösungsmitteln wie Alkoholen, Estern, Ethern und organischen Säuren;
(c) fluorhaltige Materialien, umfassend einen oder mehrere von Fluorwasserstoff (in wasserfreier Form oder als verdampfte Lösung), Trifluorethansäure und Hexafluorpropylenoxid.

4. Verfahren nach einem der vorhergehenden Ansprüche, bei dem die hydrophile, photoaktive Schicht eine Schicht aus kristallinem (Anatas-)Titanoxid mit einer Dicke zwischen 100 A und 2500 A ist.

5. Verfahren nach Anspruch 4, wobei die Schicht aus Titanoxid aus Vorläufermaterialien abgeschieden wird, die umfassen:
(a) Titanvorläufermaterialien, umfassend eines oder mehrere von verdampftem Titantetraisopropoxid, verdampftem Titantetrachlorid und verdampftem Titantetraethoxid;
(b) sauerstoffhaltige Materialien, umfassend eines oder mehrere von verdampftem Wasser, Sauerstoff selbst und verdampften sauerstoffhaltigen organischen Lösungsmitteln wie Alkoholen, Estern, Ethern und organischen Säuren.

6. Verfahren nach einem der vorhergehenden Ansprüche, bei dem die Beschichtungsschicht auf der äußersten Oberfläche der Glasscheibe unter Verwendung eines Online-Beschichtungsverfahrens durch chemische Gasphasenabscheidung abgeschieden wird.

## Revendications

1. Procédé de réduction ou de prévention de la tendance à la formation de condensation sur la surface externe d'un vitrage comprenant :
la fourniture à la surface extérieure d'un panneau de verre compris dans le vitrage d'une couche de revêtement photoactive, hydrophile, de faible émissivité, présentant un angle de contact de gouttelette d'eau de 10° à 30° et une émissivité de 0,7 ou inférieure,
dans lequel la réduction de visibilité à travers le vitrage due à la condensation est minimisée ou éliminée,
dans lequel la couche de revêtement est une couche composite comprenant deux couches de revêtement différentes ou plus,
dans lequel la couche composite comprend une couche de faible émissivité et une couche extérieure photoactive, hydrophile et
dans lequel la couche extérieure photoactive, hydrophile exhibe une photoactivité d'au moins 1 x 10⁻³ cm⁻¹ min⁻¹.

2. Procédé selon l'une quelconque des revendications précédentes, dans lequel la couche de faible émissivité est une couche d'oxyde d'étain dopé au fluor d'épaisseur supérieure à 500 Â.

3. Procédé selon l'une quelconque des revendications précédentes, dans lequel la couche d'oxyde d'étain dopé au fluor est déposée à partir de matériaux de précurseurs comprenant :
(a) des matériaux de précurseurs d'étain incluant un ou plusieurs de chlorure de diméthylétain vaporisé, tétrachlorure d'étain vaporisé, tétrabutylétain vaporisé, tétraméthylétain vaporisé et trichlorure de monobutylétain vaporisé ;
(b) des matériaux contenant de l'oxygène incluant un ou plusieurs parmi de l'eau vaporisée, de l'oxygène lui-même et des solvants organiques contenant de l'oxygène vaporisés, tels que des alcools, esters, éthers et acides organiques ;
(c) des matériaux contenant du fluor incluant un ou plusieurs parmi le fluorure d'hydrogène (dans une forme anhydre ou comme une solution vaporisée), l'acide trifluoroéthanoïque et l'oxyde d'hexafluoropropylène.

4. Procédé selon l'une quelconque des revendications précédentes, dans lequel la couche photoactive, hydrophile est une couche d'oxyde de titane (anatase) cristallin de 100 Â à 2 500 Â d'épaisseur.

5. Procédé selon la revendication 4, dans lequel la couche d'oxyde de titane est déposée à partir de matériaux de précurseurs comprenant :
(a) des matériaux de précurseurs de titane incluant un ou plusieurs parmi le tétraisopropoxyde de titane vaporisé, tétrachlorure de titane vaporisé et tétraéthoxyde de titane vaporisé ;
(b) des matériaux contenant de l'oxygène incluant un ou plusieurs parmi de l'eau vaporisée, de l'oxygène lui-même et des solvants organiques contenant de l'oxygène vaporisé, tels que des alcools, esters, éthers et acides organiques.

6. Procédé selon l'une quelconque des revendications précédentes, dans lequel la couche de revêtement est déposée sur la surface extérieure du panneau de verre en utilisant une technique de revêtement par dépôt chimique en phase vapeur en ligne.
